# EUROPÄISCHE PATENTSCHRIFT

(11) **EP 2 382 395 B1**
(45) Veröffentlichungstag und Bekanntmachung des Hinweises auf die Patenterteilung: **10.06.2015**
(21) Anmeldenummer: 09775703.3
(22) Anmeldetag: 29.01.2009
(51) Int. Cl.: F16B 5/02

(54) **VORRICHTUNG ZUM AUSRICHTEN EINES KÖRPERS RELATIV ZU EINER UNTERLAGE- ODER ANLAGEFLÄCHE**
DEVICE FOR ALIGNING A BODY RELATIVE TO A SUPPORT OR CONTACT SURFACE
DISPOSITIF POUR ALIGNER UN CORPS RELATIVEMENT À UNE SURFACE DE SUPPORT OU DE CONTACT.

(43) Veröffentlichungstag der Anmeldung: 02.11.2011
(73) Patentinhaber: Schneider Consulting, 5022 Rombach (CH)
(72) Erfinder: SCHNEIDER, Fritz, CH-5022 Rombach (CH)
(74) Vertreter: Lusuardi, Werther
(86) Internationale Anmeldenummer: PCT/CH2009/000034
(87) Internationale Veröffentlichungsnummer: WO 2010/085902

(56) Entgegenhaltungen:
- EP-A1- 1 217 222
- WO-A1-01/65897

## Beschreibung

Die Erfindung bezieht sich auf eine Vorrichtung zum Ausrichten eines Körpers relativ zu einer Unterlags- oder Anlagefläche gemäss dem Oberbegriff des Patentanspruchs 1.

Eine Justiervorrichtung mit einem inneren und einem äusseren hülsenförmigen Teil ist aus dem Dokument US 4,108,407 CABLE bekannt. Die innere Hülse dieser bekannten Vorrichtung weist ein Aussengewinde auf und ist über eine in ein Fundament eingeschraubte Ankerschraube fest fixierbar. Die äussere Hülse umfasst ein zum Aussengewinde der inneren Hülse passendes Innengewinde und ist mittels Flanschen an einem Bauteil fest eingegossen. Durch Drehen der inneren Hülse um ihre Längsachse kann das Bauteil axial angehoben oder abgesenkt und somit in seiner Lage justiert werden. Diese bekannte Vorrichtung weist jedoch den Nachteil auf, dass die Justiereinheit mit dem zu befestigenden Bauteil starr verbunden ist und vorgängig eingegossen oder eingeklebt werden muss. Das, einmal eingesetzte, Teil kann nicht zerstörungsfrei vom Bauteil getrennt oder ausgewechselt werden. Es ist fest positioniert und kann, in Bezug zum Bauteil, nicht bewegt oder verschoben werden. Es ist nicht geeignet für dünnwandige Bauteile. Die Unterlagscheibe, zwischen dem Bauteil und dem Fundament, wird nur mit der Ankerschraube gehalten und kann wegrutschen. Das Bauteil selber verdeckt die Sicht auf die Unterlagscheibe und beim Lösen der Ankerschraube kann die Unterlagscheibe verrutschen oder herunterfallen.

Die WO 01/65897 A1 zeigt einen Stand der Technik gemäß dem Oberbegriff des Anspruchs 1. Der Kopf 42 der in Figur 4 gezeigten Befestigungsschraube 40 ist ein Mittel zur Aufnahme eines Werkzeuges, in Form eines Schraubendrehers nach Seite 7, Zeilen 6-8. Ein weiteres Mittel zur Aufnahme eines Werkzeuges befindet sich am Distanzstück 36 in Form eines Außensechskantschraubenkopfes 37, Figur 3. Zur Höhenverstellung der Klemmhülse 48 greift ein Außengewinde 46 des Distanzstückes 36 in ein Innengewinde 50 der Klemmhülse 48 ein. Bei Drehen des Kopfes 37 mittels Schraubenschlüssel läßt sich demnach die Klemmhülse 48 höhenverstellen. Die Breite des Außensechskantschraubenkopfes 37 erlaubt es nicht, das er durch das Innengewinde 50 der Klemmhülse 48 durchführbar ist.

Hier will die Erfindung Abhilfe schaffen. Der Erfindung liegt die Aufgabe zugrunde, eine Vorrichtung zum Ausrichten eines Körpers relativ zu einer Unterlags- oder Anlagefläche zu schaffen, welche auf einfache Weise an dem auszurichtenden Körper montierbar, justier- und fixierbar ist. Die Erfindung will auch die Möglichkeit bieten, Bauteile zu montieren die nur von einer Seite zugänglich sind.

Die Erfindung löst die gestellte Aufgabe mit einer Vorrichtung zum Ausrichten eines Körpers relativ zu einer Unterlags- oder Anlagefläche, welche die Merkmale gemäss dem Anspruch 1 aufweist.

Die durch die Erfindung erreichten Vorteile sind im wesentlichen darin zu sehen, dass dank der erfindungsgemässen Vorrichtung:
- die Fixierung des Klemmteils am Bauteil lediglich durch Einführung einer Klemmhülse in eine Bohrung oder Schlitzloch am Bauteil und das Festziehen eines über die Klemmhülse schraubbaren Klemmelementes ermöglicht wird, d.h. auch eine Vormontage im Werk möglich ist;
- eine Verwendung nur zum Ausrichten von freistehenden Bauteilen ohne Verankerung ermöglicht wird. Da das Distanzstück eine Rotationsbewegung um seine Längsachse ausführt, wird während des Justierens das Bauteil angehoben oder abgesenkt; und
- auch das Verbinden von Bauteilen untereinander oder ein freies Aufstellen ohne Verankerung ermöglicht wird.

Weitere vorteilhafte Ausgestaltungen der Erfindung können wie folgt kommentiert werden:
In einer speziellen Ausführungsform umfasst das Distanzstück eine durchgehende zur Längsachse koaxiale Zentralbohrung. Dadurch sind die Vorteile erreichbar, dass:
   - eine Verwendung der Vorrichtung zum nachträglichen Ausrichten von Bauteilen ermöglicht wird, wobei ein leichtes Lösen der Verschraubung ausreicht, ohne dass die Verankerung entfernt oder nachkorrigiert werden muss, denn durch das Verschieben der losen relativ zur festen Hülse wird nur das Bauteil bewegt;
   - die Vorrichtung ein Bohren der Ankerlöcher durch die innere Hülse erlaubt, dass das Bauteil nicht entfernt werden muss um ein oder mehrere Anker- oder Befestigungslöcher zu bohren;
   - ein Verbinden von Bauteil zu Bauteil ebenfalls ermöglicht wird, wobei die Justierung vollumfänglich gewährleistet ist und auf die gleiche Art und Weise funktioniert;
   - eine Verwendung von Befestigungsankern und Schrauben der Grössen M6 bis und mit M60 möglich sind. Abhängig vom Schrauben- oder Ankerdurchmesser verändern sich die Masse der Justiereinheit wie auch der Justierweg;
   - freie Wahl von in die Zentralbohrung einführbaren Ankerschrauben, Schrauben und Schrauben mit Ankerhülsen, erlaubt ist
      die Zentralbohrung einen Durchmesser zwischen 7 mm für M6 und 35 mm für M30 Schrauben aufweisen kann, typischerweise 22 mm im vorliegenden Anwendungsbeispiel,
      und keine speziellen Ankerverschraubungen notwendig sind, sondern handelsübliche Verschraubungen eingesetzt werden können.

Die Zentralbohrung kann einen Durchmesser zwischen 7 mm für M6 und 35 mm für M30 Schrauben aufweisen. Es sind keine speziellen Ankerverschraubungen notwendig, sondern handelsübliche Verschraubungen können eingesetzt werden.

In einer besonderen Ausführungsform sind die Mittel zur Anlage an ein Bauteil in der Form eines fest mit der Klemmhülse verbundenen Flansches ausgebildet. Dadurch ist der Vorteil erreichbar, dass eine niedrige Bauhöhe des Klemmteils im Vergleich zu einem Klemmteil mit einer oberen und einer unteren Mutter möglich ist.

In einer anderen Ausführungsform weist das Klemmelement ein gegen den Flansch der Klemmhülse gerichtetes erstes axiales Ende und ein zweites axiales Ende auf und umfasst an seinem ersten axialen Ende eine flanschartige radiale Erweiterung.

Die Gleitbeschichtung ermöglicht den Vorteil, dass die Rotationsbewegung des Distanzstücks während des Ausrichtens des Bau- oder Geräteteils gegen einen geringeren Reibungswiderstand erfolgt, was insbesondere bei schweren Bau- oder Geräteteilen wesentlich ist. Die Gleitbeschichtung ist vorzugsweise eine Kunststoffbeschichtung.

In wiederum einer anderen Ausführungsform umfasst das Distanzstück ein auf der Standfläche eines Fundamentes auflegbares erstes Ende mit einem flanschförmigen Fuss. Dies ermöglicht den Vorteil einer Verringerung der Reibungskraft beim Rotieren des Distanzstücks durch Verringerung der Flächenpressung. Der Aussendurchmesser D_{G} des Aussengewindes am Distanzstück beträgt typischerweise 30 mm, passend zur Grundabmessung von M20. Der Aussendurchmesser D_{F} des flanschförmigen Fusses beträgt typischerweise 44 mm.

In einer weiteren Ausführungsform weist das Aussengewinde des Distanzstücks eine Gewindesteigung von mindestens 0,5 mm für M6 auf. Die Gewindesteigung ist immer im Verhältnis zur Grössenbezeichnung z.B. M6 bis M30 und der Wahl des Gewindetyps gegeben. Dadurch ist der Vorteil erreichbar, dass die Anzahl Umdrehungen des Distanzstücks zum Ausrichten des Bau- oder Geräteteils nicht zu gross wird. Zudem sind ein kleiner Kraftaufwand, ein feines Justieren und die Selbsthemmung gewährleistet.

In einer anderen Ausführungsform weist das Aussengewinde des Distanzstücks eine Gewindesteigung von maximal 1,0 mm für M30 auf. Die Gewindesteigung ist immer im Verhältnis zur Grössenbezeichnung z.B. M6 bis M30 und der Wahl des Gewindetyps gegeben. Die Gewindesteigung beträgt typischerweise 1,0 mm für das Beispiel mit M20 Anker, wodurch ein Ausrichten von schweren Bauteilen ohne enormen Kraftaufwand oder Einsatz von speziellen Werkzeugen möglich ist. Zudem ist ein kleiner Kraftaufwand, feines Justieren und die Selbsthemmung gewährleistet.

In wiederum einer anderen Ausführungsform weist das Klemmelement eine Höhe H von mindestens 12 mm und maximal 30 mm auf. Damit sind folgende Vorteile erreichbar:
- grosser Justierweg s (s = GL - L);
- geringe Bauhöhe des Klemmteilflansches; und
- geringe Bauhöhe der gesamten Vorrichtung, immer in Abhängigkeit zur Grundgrösse der Ankerschraube.
Vorzugsweise hat das Aussengewinde am Distanzstück eine Länge GL von ca. dreifachem Ankerdurchmesser und die Klemmhülse des Klemmteils eine Länge L von ca. zweifachem Ankerdurchmesser.

In einer weiteren Ausführungsform ist die radial vorstehende Schulter der Klemmhülse senkrecht zur Längsachse des Distanzstücks ausgebildet. Dies ermöglicht eine genaue flächige Anlage der Schulter der Klemmhülse an einem Bauteil.

In wiederum einer weiteren Ausführungsform bildet die radial vorstehende Schulter der Klemmhülse eine erste Auflagefläche zur Anlage an ein Bauteil und die radiale Erweiterung des Klemmelementes eine zweite Auflagefläche zur Anlage an ein Bauteil, wobei die erste und die zweite Auflagefläche eine Oberflächenstrukturierung, vorzugsweise in Form einer Verzahnung aufweisen. Damit ist der Vorteil erreichbar, dass die strukturierten Auflageflächen die Sicherheit gegen unbeabsichtigtes Lösen der Schraubverbindung erhöhen. Anstelle der Verzahnungen können die Auflageflächen auch aufgerauht sein.

Die Erfindung wird im Folgenden anhand der teilweise schematischen Darstellungen eines bevorzugten Ausführungsbeispiels noch näher erläutert.
Es ist gedacht, die Justiereinheit hauptsächlich im allgemeinen Bauwesen, in Verbindung mit Bauteilen aus Stahl, Aluminium und Chromnickelstahl einzusetzen. Die Bauteile werden auf Betonfundamente, an Wände und Decken aus Material wie, Beton, allgemeines Mauerwerk, Holz, Metall etc. befestigt.

Es zeigen:
Fig. 1 eine perspektivische Darstellung einer Ausführungsform der erfindungsgemässen Vorrichtung; und
Fig. 2 einen Längsschnitt durch die in Fig. 1 dargestellte Ausführungsform der erfindungsgemässen Vorrichtung.

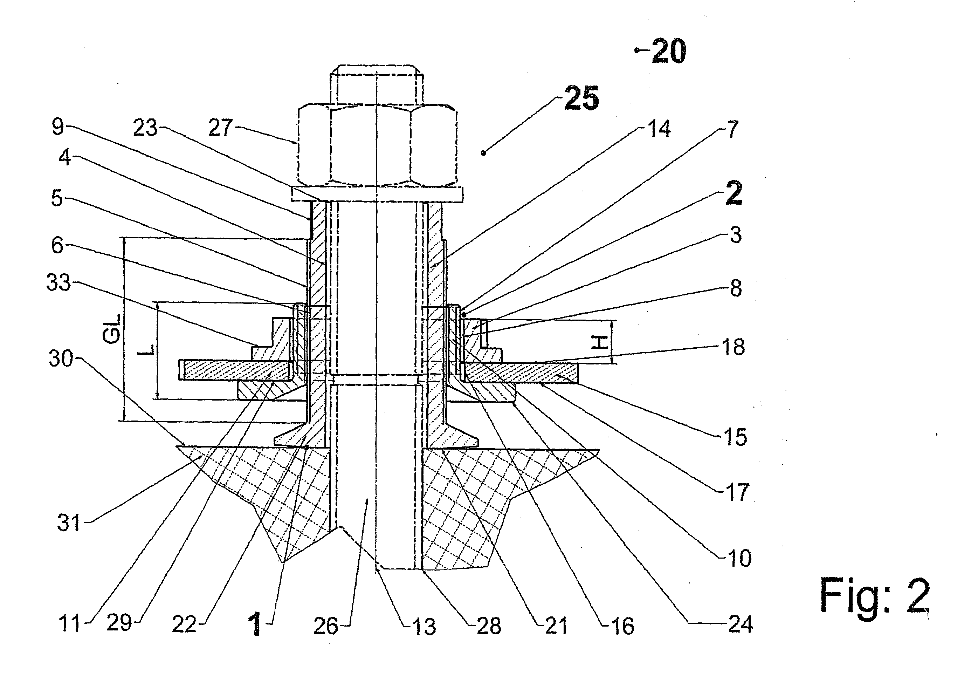

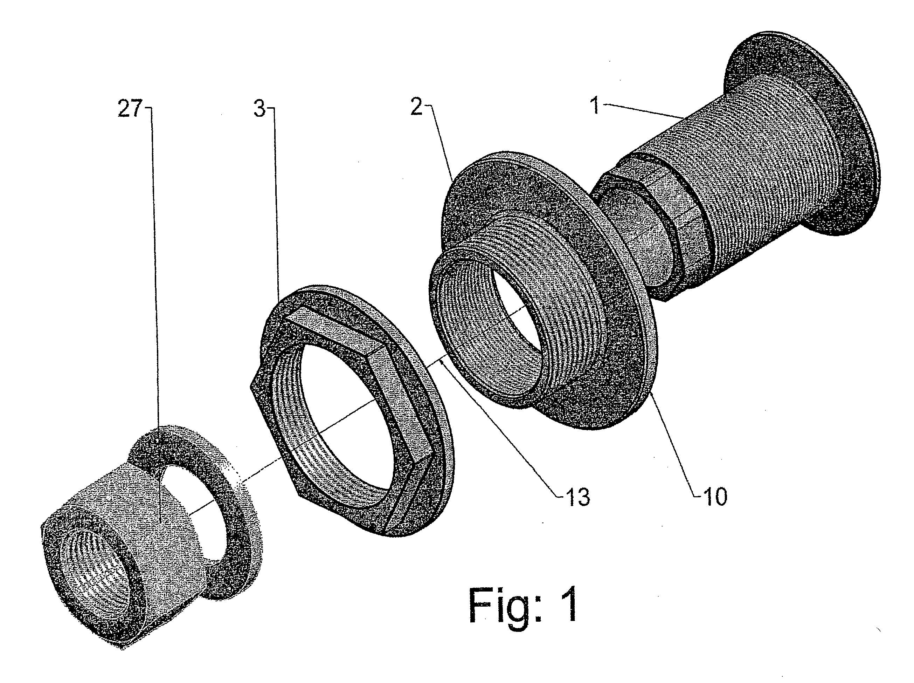

In den Fig. 1 und 2 ist eine bevorzugte Ausführungsform der erfindungsgemässen Vorrichtung 20 zum Ausrichten eines Körpers relativ zu einer Unterlags- oder Anlagefläche dargestellt, wobei der Körper hier ein Bauteil 15 oder Geräteteil ist. Die Vorrichtung 20 umfasst im wesentlichen ein an dem Bauteil 15 oder Geräteteil befestigbares Klemmteil 2 und eine koaxial im Innern des Klemmteils 2 angeordnetes Distanzstück 1. Das Klemmteil 2 umfasst eine Klemmhülse 10 mit einem Innengewinde 6 und einem Aussengewinde 7 und ein mutterartiges Klemmelement 3, dessen Innengewinde 8 mit dem Aussengewinde 7 der Klemmhülse 10 im Eingriff steht. Ferner sind die an der Klemmhülse 10 axial endständig angeordneten Mittel 24 zur Anlage an ein Bauteil 15 als fest mit der Klemmhülse 10 verbundener Flansch 11 ausgebildet. Dieser Flansch 11 weist einen grösseren Aussendurchmesser als das Aussengewinde 7 der Klemmhülse 10 auf, so dass der Flansch 11 eine radial vorstehende Schulter 29 bildet, welche in axialer Richtung an das Bauteil 15 angelegt werden kann. Die Klemmhülse 10 kann somit in eine Bohrung 16 oder ein Schlitzloch in einem Bauteil 15 eingeführt werden bis der Flansch 11 an der Auflagefläche 17 des Bauteils 15 anliegt. Das Klemmelement 3 umfasst bauteilseitig eine flanschartige radiale Erweiterung 33, welche auf der der Auflagefläche 17 gegenüberliegenden Deckfläche 18 des Bauteils 15 aufliegt, so dass das Bauteil 15 beim Festziehen des Klemmelementes 3 zwischen dem Flansch 11 an der Klemmhülse 10 und der radialen Erweiterung 33 am Klemmelement 3 festgeklemmt wird.

Das Distanzstück 1 hat eine Längsachse 13 und umfasst einen ein Aussengewinde 5 aufweisenden Schaft 14. Das Aussengewinde 5 des Distanzstücks 1 steht mit dem Innengewinde 6 der Klemmhülse 10 im Eingriff, so dass bei einer Rotationsbewegung des Distanzstücks 1 um seine Längsachse 13 relativ zum Klemmteil 2, das Klemmteil 2 und damit das Bauteil 15 relativ zum Distanzstück 1 axial verschoben wird.

Das Innengewinde 6 des Klemmteils 2, welches mit dem Aussengewinde 5 des Distanzstücks 1 im Eingriff steht, ermöglicht eine Höhenverstellung des Bauteils 15 relativ zu einem Fundament 31 oder einer Befestigungsfläche während das Aussengewinde 7 des Klemmteils 2, welches mit dem Innengewinde 8 des Klemmelementes 3 im Eingriff steht, zur Abstützung der Vorrichtung 20 am Bauteil 15 dient.

Ferner ist am Distanzstück 1 eine durchgehende zur Längsachse 13 koaxiale Zentralbohrung 4 angebracht, so dass das Distanzstück 1 über eine Ankerverschraubung 25 geschoben werden kann. Das Distanzstück 1 hat ein erstes und ein zweites die Längsachse 13 schneidendes Ende 21, 23, wobei das Distanzstück 1 an seinem ersten Ende 21 mit einem flanschförmigen Fuss 22 versehen ist und an seinem zweiten Ende 23 Mittel 9 zur Aufnahme eines Werkzeugs aufweist, welche einen zur Längsachse 13 Achtkant-Querschnitt haben und zum Rotieren des Distanzstücks 1 um seine Längsachse 13 relativ zum Klemmteil 2 mittels eines Werkzeugs, beispielsweise eines Gabelschlüssels geeignet sind.

In der hier beschriebenen Ausführungsform hat das Aussengewinde 5 am Distanzstück 1 eine Länge GL von 38 mm, die Klemmhülse 10 des Klemmteils 2 eine Länge L von 20 mm und das Klemmelement 3 eine Höhe H von 9 mm.
Funktion der Vorrichtung 20:
Das aus einer Klemmhülse 10 und einem Klemmelement 3 bestehende Klemmteil 2 wird mit dem Bauteil 5 fest verschraubt. Dazu wird die Klemmhülse 10 in eine Bohrung 16 im Bauteil 5 eingeführt bis der im Durchmesser gegenüber dem Schaft der Klemmhülse 10 vergrösserte Flansch 11 an der Auflagefläche 17 des Bauteils 15 anliegt. Anschliessend wird das Klemmelement 3 über das Aussengewinde 7 der Klemmhülse 10 geschraubt bis sie auf der Deckfläche 18 des Bauteils 15 aufliegt und wird festgezogen.

Durch Drehen des Distanzstücks 1 mit einem an den als Aussenachtkant ausgebildeten Mitteln 9 angesetzten Werkzeug wird das Distanzstück 1 axial gegenüber dem Klemmteil 2 und damit gegenüber dem Bauteil 5 verschoben, so dass das Bauteil 5 gegenüber der Standfläche 30 angehoben oder abgesenkt wird.

Die Ankerverschraubung 25 ist noch nicht festgezogen, sondern nur soweit angezogen, dass sich das Distanzstück 1 um seine Längsachse 13 drehen kann. Die Bewegung des Klemmteils 2 findet innerhalb des Justierwegs s (s = GL - L) am Distanzstück 1 statt. Während des Drehens des Distanzstücks 1 wird die bauseitige Mutter 27 der Ankerverschraubung 25 mit einem zweiten Werkzeug oder einer Kontermutter festgehalten.

Montage der Vorrichtung 20 an einem Bauteil 15:
Die Ankerlöcher 28 können im Fundament 31 vor dem Positionieren der Vorrichtung gebohrt oder durch die Zentralbohrung 4 des Distanzstücks 1 gebohrt werden. Nach dem Befestigen des Ankerbolzens 26 (oder einer Schraube mit Ankerhülse) im Fundament 31 wird das Bauteil 15 mit der in einer entsprechenden Bohrung 16 eingeführten erfindungsgemässen Vorrichtung 20 mittels einer bauseitigen Mutter 27 mit dem Ankerbolzen 26 (oder einer Schraube mit Ankerhülse) am Fundament 31 befestigt. Die Ankerverschraubung 25 wird leicht angezogen und das Klemmelement 3 des Klemmteils 2 festgezogen und gesichert. Anschliessend kann das Bauteil 15 durch Drehen des Distanzstückes 1 um dessen Längsachse 13 ausgerichtet und durch Festziehen der bauseitigen Mutter 27 fixiert werden.

## Patentansprüche

1. Verwendung einer Vorrichtung (20) zum Ausrichten von Bauteilen (15) im Stahl- und Metallbau relativ zu einer Unterlags- oder Anlagefläche, wobei die Vorrichtung (20) umfasst:
A) ein an einem Bauteil (15) befestigbares Klemmteil (2) mit einer ein Innengewinde (6) aufweisenden Klemmhülse (10) und einem Klemmelement (3) mit einem Innengewinde (8); und
B) ein Distanzstück (1) mit einer Längsachse (13) und einem ein Aussengewinde (5) aufweisenden Schaft (14), wobei das Aussengewinde (5) des Distanzstücks (1) mit dem Innengewinde (6) der Klemmhülse (10) in Eingriff bringbar ist, wobei
C) die Klemmhülse (10) ein Aussengewinde (7) und axial endständig angeordnete, eine radial vorstehende Schulter (29) aufweisende Mittel (24) zur Anlage an ein Bauteil (15) umfasst; und
D) das Innengewinde (8) des Klemmelementes (3) mit dem Aussengewinde (7) der Klemmhülse (10) in Eingriff bringbar ist, so dass das Bauteil (15) zwischen dem Klemmelement (3) und der Schulter (29) der Klemmhülse (10) festklemmbar ist, **dadurch gekennzeichnet, dass**
E) das Aussengewinde (5) des Distanzstücks (1) mit einer Gleitbeschichtung versehen ist; und
F) Mittel (9) zur Aufnahme eines Werkzeugs am Distanzstück (1) durch das Innengewinde (6) der Klemmhülse (10) durchführbar sind, so dass das Aussengewinde (5) des Distanzstücks (1) mit dem Innengewinde (6) der Klemmhülse (10) in Eingriff bringbar ist.

2. Verwendung nach Anspruch 1, **dadurch gekennzeichnet, dass** die Mittel (24) zur Anlage an ein Bauteil (15) in der Form eines fest mit der Klemmhülse (10) verbundenen Flansches (11) ausgebildet sind.

3. Verwendung nach Anspruch 2, **dadurch gekennzeichnet, dass** das Klemmelement (3) ein gegen den Flansch (11) der Klemmhülse (10) gerichtetes erstes axiales Ende und ein zweites axiales Ende aufweist und als Mutter mit einer flanschartigen radialen Erweiterung (33) am ersten axialen Ende ausgebildet ist.

4. Verwendung nach einem der Ansprüche 1 bis 3, **dadurch gekennzeichnet, dass** das Distanzstück (1) eine durchgehende zur Längsachse (13) koaxiale Zentralbohrung (4) umfasst.

5. Verwendung nach einem der Ansprüche 1 bis 4, **dadurch gekennzeichnet, dass** das ganze Distanzstück (1) mit einer Gleitbeschichtung versehen ist.

6. Verwendung nach einem der Ansprüche 1 bis 5, **dadurch gekennzeichnet, dass** das Aussengewinde (5) des Distanzstücks (1) eine Gewindesteigung von mindestens 0,5 mm für M6 aufweist.

7. Verwendung nach einem der Ansprüche 1 bis 6, **dadurch gekennzeichnet, dass** das Aussengewinde (5) des Distanzstücks (1) eine Gewindesteigung von maximal 1,0 mm für M30 aufweist.

8. Verwendung nach einem der Ansprüche 1 bis 7, **dadurch gekennzeichnet, dass** das Klemmelement (3) eine Höhe H von mindestens 12 mm und maximal 30 mm aufweist.

9. Verwendung nach einem der Ansprüche 1 bis 8, **dadurch gekennzeichnet, dass** die radial vorstehende Schulter (29) der Klemmhülse (10) senkrecht zur Längsachse (13) des Distanzstücks (1) ausgebildet ist.

10. Verwendung nach einem der Ansprüche 1 bis 9, **dadurch gekennzeichnet, dass** die radial vorstehende Schulter (29) der Klemmhülse (10) eine erste Auflagefläche zur Anlage an ein Bauteil (15) bildet und die radiale Erweiterung des Klemmelementes (3) eine zweite Auflagefläche zur Anlage an ein Bauteil (15) bildet und dass die erste und die zweite Auflagefläche eine Oberflächenstrukturierung, vorzugsweise in Form einer Verzahnung aufweisen.

## Claims

1. Use of a device (20) for adjusting components (15) in steel and metal construction relative to a support or contact surface, the device (20) comprising:
A) a clamping member (2) that is fastenable to a component (15) and comprises a clamping sleeve (10) which has an internal thread (6) and a clamping element (3) which has an internal thread (8); and
B) a spacer (1) having a longitudinal axis (13) and a shaft (14) that has an external thread (5), wherein the external thread (5) of the spacer (1) is engageable with the internal thread (6) of the clamping sleeve (10), wherein
C) the clamping sleeve (10) comprises an external thread (7) and means (24) for contacting a component (15), the means being disposed in an axial end position and having a radially projecting shoulder (29); and
D) the internal thread (8) of the clamping element (3) is engageable with the external thread (7) of the clamping sleeve (10) so that the component (15) is fixedly clampable between the clamping element (3) and the shoulder (29) of the clamping sleeve (10), **characterized in that**
E) the external thread (5) of the spacer (1) is provided with a slide coating; and
F) means (9) for receiving a tool at the spacer (1) are apt to pass through the internal thread (6) of the clamping sleeve (10) so that the external thread (5) of the spacer (1) is engageable with the internal thread (6) of the clamping sleeve (10).

2. The use according to claim 1, **characterized in that** the means (24) for contacting a component (15) is configured in the form of a flange (11) that is fixedly connected to the clamping sleeve (10).

3. The use according to claim 2, **characterized in that** the clamping element (3) has a first axial end that is directed towards the flange (11) of the clamping sleeve (10) and has a second axial end and is configured as a nut having a flange-like radial enlargement (33) at the first axial end.

4. The use according to any one of claims 1 to 3, **characterized in that** the spacer (1) comprises a continuous central hole (4) that is coaxial with the longitudinal axis (13).

5. The use according to any one of claims 1 to 4, **characterized in that** the entire spacer (1) is provided with a slide coating.

6. The use according to any one of claims 1 to 5, **characterized in that** the external thread (5) of the spacer (1) has a thread pitch of at least 0.5 mm for M6.

7. The use according to any one of claims 1 to 6, **characterized in that** the external thread (5) of the spacer (1) has a thread pitch of maximum 1.0 mm for M30.

8. The use according to any one of claims 1 to 7, **characterized in that** the clamping element (3) has a height H of at least 12 mm and maximum of 30 mm.

9. The use according to any one of claims 1 to 8, **characterized in that** the radially projecting shoulder (29) of the clamping sleeve (10) is configured to be perpendicular to the longitudinal axis (13) of the spacer (1).

10. The use according to any one of the claims 1 to 9, **characterized in that** the radially projecting shoulder (29) of the clamping sleeve (10) forms a first bearing surface for contacting a component (15), and the radial enlargement of the clamping element (3) forms a second bearing surface for contacting a component (15), and that the first and the second bearing surfaces have a surface structure, preferably in the form of a toothing.

## Revendications

1. Utilisation d'un dispositif (20) destiné à l'alignement de pièces modulaires (15) dans une construction en acier ou métallique par rapport à une surface de support ou d'appui, le dispositif (20) comprenant :
A) une pièce de serrage (2) pouvant être fixée à une pièce modulaire (15) au moyen d'une douille de serrage (10) présentant un filetage intérieur (6) et d'un élément de serrage (3) avec un filetage intérieur (8) ; et
B) une pièce d'écartement (1) avec un axe longitudinal (13) et un arbre (14) présentant un filetage extérieur (5), le filetage extérieur (5) de la pièce d'écartement (1) pouvant être mis en prise dans le filetage intérieur (6) de la douille de serrage (10),
C) la douille de serrage (10) comprenant un filetage extérieur (7) et un moyen (24) servant d'appui au niveau d'une pièce modulaire (15), disposé axialement à une extrémité et présentant un épaulement (29) faisant saillie radialement ; et
D) le filetage intérieur (8) de l'élément de serrage (3) pouvant être mis en prise avec le filetage extérieur (7) de la douille de serrage (10), de sorte que la pièce modulaire (15) peut être serrée à fond entre l'élément de serrage (3) et l'épaulement (29) de la douille de serrage (10),
**caractérisée en ce que**
E) le filetage extérieur (5) de la pièce d'écartement (1) est pourvu d'un revêtement de glissement ; et
F) des moyens (9) destinés à la prise d'un outil à la pièce d'écartement (1) sont conçus pour passer par le filetage intérieur (6) de la douille de serrage (10), de sorte que le filetage extérieur (5) de la pièce d'écartement (1) peut être mis en prise dans le filetage intérieur (6) de la douille de serrage (10).

2. Utilisation selon la revendication 1, **caractérisée en ce que** les moyens (24) servant d'appui au niveau d'une pièce modulaire (15) sont conçus sous la forme d'une bride (11) reliée de manière fixe à la douille de serrage (10).

3. Utilisation selon la revendication 2, **caractérisée en ce que** l'élément de serrage (3) présente une première extrémité axiale dirigée contre la bride (11) de la douille de serrage (10) et une deuxième extrémité axiale et est conçu comme un écrou avec une extension (33) radiale en forme de bride au niveau de la première extrémité axiale.

4. Utilisation selon l'une des revendications 1 à 3, **caractérisée en ce que** la pièce d'écartement (1) comprend un alésage central (4) coaxial et continu par rapport à l'axe longitudinal (13).

5. Utilisation selon l'une des revendications 1 à 4, **caractérisée en ce que** toute la pièce d'écartement (1) est pourvue d'un revêtement de glissement.

6. Utilisation selon l'une des revendications 1 à 5, **caractérisée en ce que** le filetage extérieur (5) de la pièce d'écartement (1) présente un pas de filetage d'au moins 0,5 mm pour M6.

7. Utilisation selon l'une des revendications 1 à 6, **caractérisée en ce que** le filetage extérieur (5) de la pièce d'écartement (1) présente un pas de filetage d'au plus 1,0 mm pour M30.

8. Utilisation selon l'une des revendications 1 à 7, **caractérisée en ce que** l'élément de serrage (3) présente une hauteur H d'au moins 12 mm et d'au plus 30 mm.

9. Utilisation selon l'une des revendications 1 à 8, **caractérisée en ce que** l'épaulement (29), faisant saillie radialement de la douille de serrage (10), est conçu à la perpendiculaire de l'axe longitudinal (13) de la pièce d'écartement (1).

10. Utilisation selon l'une des revendications 1 à 9, **caractérisée en ce que** l'épaulement (29), faisant saillie radialement de la douille de serrage (10), forme une première surface de soutien servant d'appui au niveau d'une pièce modulaire (15) et l'extension radiale de l'élément de serrage (3) forme une deuxième surface de soutien servant d'appui au niveau d'une pièce modulaire (15), et **caractérisée en ce que** la première et la deuxième surface de soutien présentent une structuration en surface, de préférence sous la forme de denture.
